(19) Europäisches Patentamt / European Patent Office / Office européen des brevets

(11) **EP 3 904 164 B1**

(12) **FASCICULE DE BREVET EUROPEEN**

(45) Date de publication et mention de la délivrance du brevet:
**23.08.2023 Bulletin 2023/34**

(21) Numéro de dépôt: **21171040.5**

(22) Date de dépôt: **28.04.2021**

(51) Classification Internationale des Brevets (IPC):
**B60R 21/38** *(2011.01)*    **E05D 11/00** *(2006.01)*

(52) Classification Coopérative des Brevets (CPC):
**B60R 21/38**

(54) **DISPOSITIF DE LEVEE DE CAPOT**

HAUBENHEBEVORRICHTUNG

DEVICE FOR LIFTING COVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.04.2020 FR 2004254**

(43) Date de publication de la demande:
**03.11.2021 Bulletin 2021/44**

(73) Titulaire: **Autoliv Development AB**
**447 83 Vårgårda (SE)**

(72) Inventeurs:
• **ANDERSSON, Mikael**
**44134 Alingsås (SE)**
• **RYDSMO, Erik**
**52495 Ljung (SE)**

(74) Mandataire: **Poindron, Cyrille**
**Novagraaf International SA**
**Chemin de l'Echo 3**
**1213 Onex (CH)**

(56) Documents cités:
EP-B1- 1 452 408          WO-A1-02/072393
DE-A1-102005 014 567     GB-A- 2 475 474

## Description

Domaine technique de l'invention

La présente invention concerne de manière générale un dispositif de levée de capot monté sur un véhicule automobile. En particulier, le dispositif de levée de capot selon la présente invention est typiquement utilisé dans le cas d'une collision avec un piéton, pour soulever le capot afin de limiter les blessures du piéton. État de la technique

Il est connu dans l'art antérieur des dispositifs de levée de capot, tel que celui décrit dans le document EP1452408B1 agencé pour recevoir une charnière de capot, afin de soulever en cas d'urgence le capot du côté du pare brise. En contrepartie, ce système présente notamment les inconvénients d'avoir une structure complexe et donc onéreuse, et ne pas pouvoir être utilisé sur des véhicules où le capot bascule vers l'avant, car les charnières du capot sont placées du côté du pare chocs avant, c'est-à-dire du côté opposé où doit être placé un tel dispositif de levée de capot. Le document WO02072393A1 divulgue un système de sécurité pour soulever un capot d'un véhicule.

Exposé de l'invention

Un but de la présente invention est de répondre aux inconvénients des documents de l'art antérieur mentionnés ci-dessus et en particulier, tout d'abord, de proposer un dispositif de levée de capot qui permette de soulever en cas d'urgence un capot de véhicule du côté du pare brise, même si le capot est articulé pour basculer vers l'avant du véhicule.

Pour cela un premier aspect de l'invention concerne un dispositif de levée de capot, selon la revendication 1, comprenant :

- une embase, agencée pour être solidaire d'un châssis de véhicule,
- une tête de poussée, agencée pour soulever un capot de véhicule et mobile entre une position de repos et une position activée,
- un actionneur pyrotechnique, agencé pour déplacer la tête de poussée depuis la position de repos vers la position activée, après actionnement,
- un organe de verrouillage, agencé pour s'engager avec le capot de véhicule lors du déplacement de la tête de poussée depuis la position de repos vers la position activée,

le dispositif de levée de capot comprenant un membre de liaison déformable, reliant l'embase à la tête de poussée et agencé pour être déformé, de préférence plastiquement, lors du déplacement de la tête de poussée depuis la position de repos vers la position activée, après actionnement de l'actionneur pyrotechnique,

l'organe de verrouillage étant agencé pour être constamment dégagé du capot de véhicule lorsque la tête de poussée est en position de repos.

Le dispositif de levée de capot selon la mise en oeuvre ci-dessus comprend un organe de verrouillage qui laisse libre le capot lorsque la tête de poussée est en position de repos, et qui s'accroche avec le capot lorsque la tête de poussée est en position activée. En d'autres termes, le capot du véhicule est laissé libre tant que le dispositif de levée de capot n'est pas activé, et une fois activé, la tête de poussée du dispositif de levée de capot est engagée avec le capot et le maintien en position activée.

Selon un mode de réalisation, l'organe de verrouillage peut être agencé pour être mobile entre :

- une position dégagée, dans laquelle le capot de véhicule peut être laissé libre par l'organe de verrouillage,
- une position engagée, dans laquelle le capot de véhicule peut être engagé avec l'organe de verrouillage,

et l'organe de verrouillage peut passer de la position dégagée à la position engagée lorsque la tête de poussée passe de la position de repos à la position activée. Selon cette mise en oeuvre, c'est le déplacement de la tête de poussée vers la position activée qui déclenche le passage de l'organe de verrouillage de la position dégagée vers la position engagée. Autrement dit, le fonctionnement de l'actionneur pyrotechnique provoque le déplacement de la tête de poussée vers la position activée, et simultanément le passage de l'organe de verrouillage en position engagée pour accrocher le capot. De manière préférentielle, le dispositif de levée est agencé pour que l'organe de verrouillage passe dans la position engagée en tout début de déplacement de la tête de poussée, par exemple dans les 10 premiers millimètres de la course de la tête de poussée.

Selon un mode de réalisation, l'organe de verrouillage peut être embarqué sur la tête de poussée. En conséquence, l'organe de verrouillage suit le mouvement de la tête de poussée.

Selon un mode de réalisation, l'organe de verrouillage peut comprendre une portion élastique, et, lorsque la tête de poussée est en position de repos, la portion élastique peut être engagée avec l'embase, de sorte à pouvoir être mise en tension. La portion élastique de l'organe de verrouillage est solidaire de l'embase, qui est une pièce statique. Cependant, l'organe de verrouillage est embarqué sur la tête de poussée, si bien que dès que la tête de poussée se déplace par rapport à l'embase pour aller en position activée, la portion élastique de l'organe de verrouillage se déplace également par rapport à l'embase.

Selon un mode de réalisation, lorsque la tête de poussée passe de la position de repos à la position activée, la portion élastique peut être agencée pour se dégager de l'embase, de sorte à pouvoir retourner dans une position détendue, pour pouvoir engager l'organe de verrouillage avec le capot de véhicule. Dès que la tête de poussée se déplace par rapport à l'embase pour aller en position activée, la portion élastique de l'organe de verrouillage se dégage de l'embase et se détend automatiquement pour que l'organe de verrouillage puisse accrocher le capot de véhicule.

Selon un mode de réalisation, l'embase peut comprendre au moins une contre forme agencée pour recevoir la portion élastique lorsque la tête de poussée est en position de repos.

Selon un mode de réalisation, l'embase peut comprendre :

- une portion d'assise, agencée pour être attachée sur le châssis du véhicule,
- une aile avec une première extrémité liée à la portion d'assise et une deuxième extrémité comprenant la contre forme.

Selon un mode de réalisation, l'organe de verrouillage peut former une agrafe élastique en Vé, avec une partie du Vé insérée dans une fente de la tête de poussée, et, lorsque la tête de poussée est en position de repos, les deux extrémités libres du Vé peuvent être écartées élastiquement l'une de l'autre par l'embase. Lorsque la tête de poussée est en position de repos, les deux extrémités libres du Vé de l'organe de verrouillage sont solidaires et mises en tension par l'embase, qui est une pièce statique. Cependant, l'organe de verrouillage est embarqué sur la tête de poussée, si bien que dès que la tête de poussée se déplace par rapport à l'embase pour aller en position activée, les deux extrémités libres du Vé de l'organe de verrouillage se déplacent également par rapport à l'embase et peuvent s'en libérer pour retourner en position détendue, ce qui place l'organe de verrouillage dans une configuration pour s'accrocher avec le capot de véhicule. Par exemple, un plot épaulé du capot de véhicule peut parfaitement passer librement entre les deux extrémités libres du Vé de l'organe de verrouillage mises en tension par l'embase, et rester accroché par les deux extrémités libres du Vé libérées de l'embase et revenues en position détendue.

Selon un mode de réalisation, l'organe de verrouillage peut être un jonc élastique.

Selon un mode de réalisation, l'actionneur pyrotechnique peut comprendre un piston mobile entre une position initiale de piston et une position finale de piston, et la course Cp du piston entre la position finale de piston et la position initiale de piston peut être inférieure à la course Ct de la tête de poussée entre la position activée et la position de repos,

et de préférence :

$$Ct > 1.5 \times Cp \; ;$$

et plus préférentiellement :

$$Ct > 1.9 \times Cp$$

Autrement dit, la course de la tête de poussée (et donc du capot de véhicule) est bien supérieure à celle du piston. Le passage vers la position activée se fait donc par inertie après la mise en mouvement initiale provoquée par l'actionneur pyrotechnique.

Selon un mode de réalisation, le membre de liaison déformable, lorsque la tête de poussée est en position de repos, peut présenter au moins un pli et deux portions repliées sur elle mêmes, et le membre de liaison déformable peut comprendre une échancrure agencée au niveau du pli. Une telle échancrure permet former une zone de faiblesse et de garantir que la déformation du membre déformable s'effectue au niveau du pli, pour « déplier » le membre déformable lors du passage de la tête de poussée de la position de repos à la position activée.

Selon un mode de réalisation, le membre de liaison déformable, lorsque la tête de poussée est en position de repos, peut présenter une pluralité de plis et une section transversale STp du membre de liaison déformable au niveau de chaque pli peut être inférieure à une section transversale STi du membre de liaison déformable entre deux plis,

et de préférence :

$$STi > 2 \times STp \; ;$$

et plus préférentiellement :

$$STi > 3 \times STp$$

Une telle différence de section transversale permet de former une zone de faiblesse et de garantir que la déformation du membre déformable s'effectue au niveau des plis, pour « déplier » le membre déformable lors du passage de la tête de poussée de la position de repos à la position activée.

Selon un mode de réalisation, l'embase, le membre de liaison déformable et la tête de poussée peuvent être formés dans une même pièce de métal, par exemple une tôle métallique.

Un deuxième aspect de l'invention concerne un véhicule automobile selon la revendication 14 comprenant:

- un capot de véhicule,
- au moins un dispositif de levée de capot selon le premier aspect.

Selon un mode de réalisation, le véhicule automobile peut comprendre un dispositif de verrouillage du capot de véhicule en position fermée, distinct du dispositif de levée de capot. Autrement dit, la fonction de verrouillage / fermeture du capot de véhicule en fonctionnement normal (pour accéder au compartiment sous capot, au moteur ou à un espace de rangement) n'est pas effectuée par le dispositif de levée de capot, mais par un dispositif de verrouillage distinct. En conséquence, le dispositif de levée de capot, et l'organe de verrouillage en particulier, n'est pas engagé avec le capot de véhicule pendant cette phase de vie normale du véhicule : le capot de véhicule peut être librement ouvert et fermé par l'utilisateur. Cependant, en cas d'urgence (un choc piéton par exemple), le dispositif de levée de capot est activé et l'organe de verrouillage s'accroche au capot de véhicule pour garantir que le capot suivra bien la tête de poussée lors de son déplacement, et s'arrêtera également lorsque la tête de poussée est en position activée.

Dans la séquence de levée du capot, on peut alors prévoir de d'abord déverrouiller le dispositif de verrouillage, et ensuite actionner le dispositif de levée de capot, après un court temps prédéterminé.

Selon une mise en oeuvre, le dispositif de levée de capot peut être agencé du côté du pare brise, et le capot de véhicule peut être agencé pour basculer vers l'avant du véhicule. En particulier, le capot de véhicule peut être agencé pour pivoter vers l'avant du véhicule, c'est-à-dire que le véhicule peut comprendre au moins une articulation du type charnière reliant le capot de véhicule au châssis du véhicule et agencée du côté avant du capot (du côté calandre), alors que le dispositif de levée de capot peut être agencé du côté arrière du capot de véhicule (du côté pare brise).

Description des figures

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :

[fig. 1] représente une vue générale d'un véhicule automobile équipé d'un capot de véhicule ;

[fig. 2] représente une vue en perspective d'un dispositif de levée de capot selon la présente invention, avec une tête de poussée dans une position de repos ;

[fig. 3] représente le dispositif de levée de capot de la figure 2, avec une portion d'ancrage du capot de véhicule de la figure 1 ;

[fig. 4] représente une coupe longitudinale du dispositif de levée de capot de la figure 3,

[fig. 5] représente une coupe transversale du dispositif de levée de capot de la figure 3, avec la tête de poussée en position de repos ;

[fig. 6] représente la coupe transversale du dispositif de levée de capot de la figure 5, avec la tête de poussée qui quitte la position de repos pour aller dans une position activée ;

[fig. 7] représente la coupe transversale du dispositif de levée de capot de la figure 5, avec la tête de poussée en position activée.

Description détaillée de mode(s) de réalisation

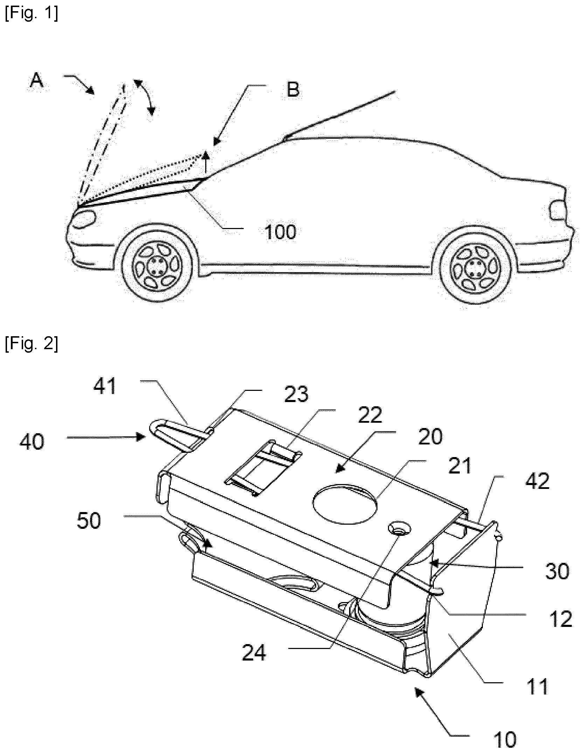

La figure 1 représente un véhicule automobile avec un capot de véhicule 100 qui couvre un compartiment avant du véhicule, par exemple un compartiment moteur. Le capot de véhicule 100 peut s'ouvrir, et dans le cas présent, le capot de véhicule 100 est prévu pour s'ouvrir vers l'avant pour aller dans une position d'ouverture normale A, comme le montre la silhouette en traits mixtes fins. Dans la position d'ouverture normale A, le capot de véhicule laisse libre accès à un utilisateur, et il peut être fermé et ouvert à loisir. On peut prévoir un dispositif de verrouillage pour maintenir le capot de véhicule 100 fermé, une serrure par exemple. Le dispositif de verrouillage est alors placé à proximité du pare brise.

Pour protéger efficacement un piéton ou un cycliste lors d'un choc avec le véhicule, il est avantageux de soulever le capot de véhicule 100 pour le placer dans une position de sécurité B représentée en traits pointillés. Le côté arrière du capot de véhicule 100 est typiquement soulevé de quelques dizaines de millimètres ou à un ou plusieurs centaine(s) de millimètres. Une fois dans la position de sécurité B, le capot de véhicule doit y rester (pour ne pas se refermer librement ou continuer de s'ouvrir librement).

A cet effet, un dispositif de levée de capot tel que celui de la figure 2 est proposé, et comprend :

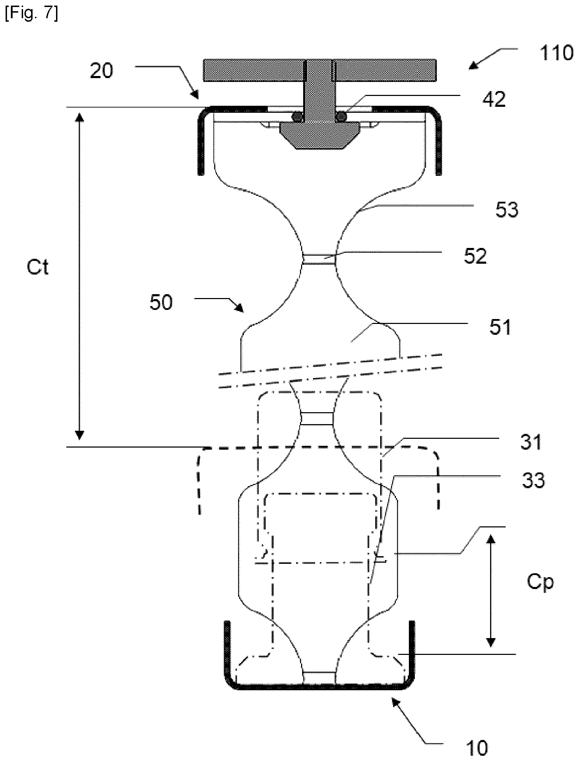

- une embase 10, agencée pour être solidaire du châssis de véhicule,
- une tête de poussée 20, agencée pour soulever le capot de véhicule 100, et mobile entre une position de repos (figures 2, 3, 4 et 5) et une position activée (figure 7)
- un actionneur pyrotechnique 30, monté entre l'embase 10 et la tête de poussée 20, agencé pour déplacer la tête de poussée 20 depuis la position de repos vers la position activée, après actionnement
- un organe de verrouillage 40, agencé pour s'engager avec le capot de véhicule 100 lorsque la tête de poussée 20 est en position activée,
- un membre de liaison déformable 50, reliant l'embase 10 à la tête de poussée 20.

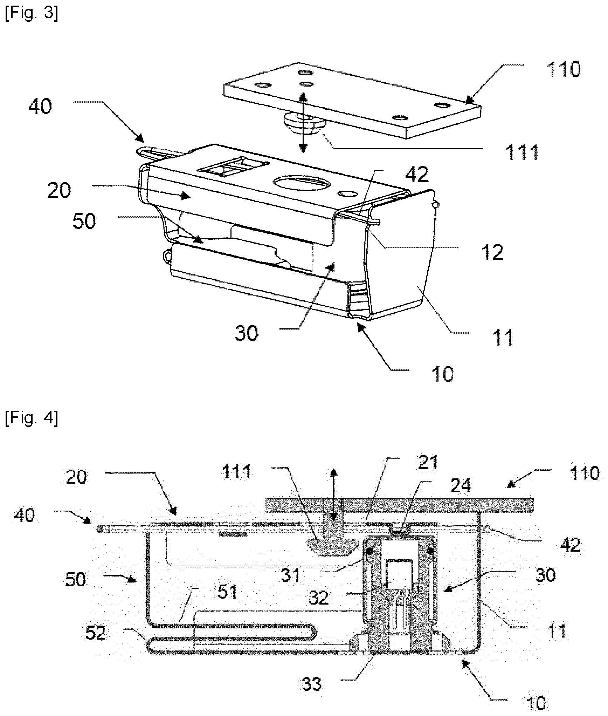

Sur la figure 2, la tête de poussée 20 est donc en position de repos, et le membre de liaison déformable 50 est dans une configuration pliée, comme on le voit mieux figure 4, et comprend une succession de parties planes 51, séparées par des pli 52. La figure 7 représente la tête de poussée en position activée, et le membre de liaison déformable 50 est alors déplié. Une déformation plastique, irréversible a eu lieu lors du passage de la tête de poussée 20 de la position de repos vers la position activée. Comme le montre la figure 7, le membre de liaison déformable 50 comprend des échancrures 53 au niveau des plis 52, ce qui permet de garantir que la déformation plastique du membre de liaison déformable est bien localisée au niveau des plis 52, sans affecter les parties planes 51.

On peut remarquer sur la figure 4 que l'embase 10, le membre de liaison déformable 50 et la tête de poussée 20 sont formés dans une même tôle découpée et pliée à façon. Ainsi, la structure globale est simple et peu complexe à réaliser (par poinçonnage, découpe, emboutissage et pliage par exemple. On peut prévoir une tôle d'acier à haute limite élastique (HLE) avec une limite élastique d'au moins 200 MPa, ou d'au moins 300 Mpa, et une épaisseur comprise entre 0.7 et 2.5 mm.

Pour revenir à la figure 2, on peut remarquer que l'embase 10 comprend une portion d'assise (la face inférieure non visible) qui comprend notamment une aile 11 qui présente à son extrémité supérieure deux contre formes 12 qui reçoivent chacune une extrémité libre de l'organe de verrouillage 40.

La tête de poussée 20 comprend :

- deux fentes 22 et 23 qui sont formées par découpe emboutissage et dimensionnées pour loger l'organe de verrouillage 40, qui est ici un jonc plié formant une agrafe en forme de Vé,
- un bossage 24, en regard de l'actionneur pyrotechnique 30,
- un trou de passage 21, d'une dimension inférieure à un écartement, au niveau du trou de passage 21, des pattes de l'agrafe formant l'organe de verrouillage 40, les pattes de l'agrafe formant des portions élastiques dont les extrémités libres sont engagées dans les contre formes 12 de l'embase 10.

L'actionneur pyrotechnique 30 comprend, comme le montre la figure 4, un socle 33, qui reçoit un allumeur électro pyrotechnique 32, et un piston 31 en appui ou au moins en regard du le bossage 24. Lors du fonctionnement de l'allumeur électro pyrotechnique 32, des gaz sous pression provoquent le déplacement vers le haut du piston 31, ce qui déplace la tête de poussée 20 vers le haut. On peut prévoir par exemple un allumeur électro pyrotechnique 32 qui comprend une masse de matière pyrotechnique comprise entre 200 mg et 2 g, et on peut envisager d'utiliser de manière non limitative des matières pyrotechniques comprenant du bore, et/ou du titane, et/ou du nitrate de potassium, et/ou du perchlorate de potassium.

Comme indiqué ci-dessus, l'organe de verrouillage 40 est une agrafe en forme de Vé, embarqué sur la tête de poussée 20, car inséré dans les fentes 22 et 23 de la tête de poussée. Cependant les extrémités libres 42 de l'organe de verrouillage 40 sont engagées dans les contre formes 12 de l'aile 11 de l'embase 10. Cet engagement extrémités libres 42 dans les contre formes 12 est effectué sous tension. En d'autres termes, dans la configuration de la figure 2, lorsque la tête de poussée est en position de repos, les pattes ou extrémités libres 42 sont maintenues écartées l'une de l'autre par l'aile 11. Dans une position détendue, les pattes ou extrémités libres 42 seraient plus proches l'une de l'autre, et seraient visibles au travers du trou de passage 12 par exemple.

Il est à noter que lorsque la tête de poussée passe de la position de repos (figure 2) à la position activée (figure 7), alors les extrémités libres 42 se dégagent des contre formes 12, si bien qu'elles peuvent se rapprocher l'une de l'autre, en tout début du déplacement, par exemple dans les premiers millimètres de course, par exemple dans les dix premiers millimètres.

La figure 3 représente le dispositif de levée de capot de la figure 2, avec une portion d'ancrage 110 qui fait partie du capot de véhicule 100. La portion d'ancrage 110 présente un plot épaulé 111 qui est en regard du trou de passage 121 de la tête de poussée 20. Le diamètre du plot épaulée 111 est inférieur à celui du trou de passage 21, si bien que le plot épaulé peut entrer et sortir librement du trou de passage 21, sans interférence ou retenue. Autrement dit, lorsque la tête de poussée 20 est en position de repos, l'organe de verrouillage 40 est constamment dégagé du plot épaulé 111.

En particulier, dans la coupe de la figure 4, le plot épaule est inséré dans le trou de passage 21, le capot de véhicule 100 étant dans la position fermée.

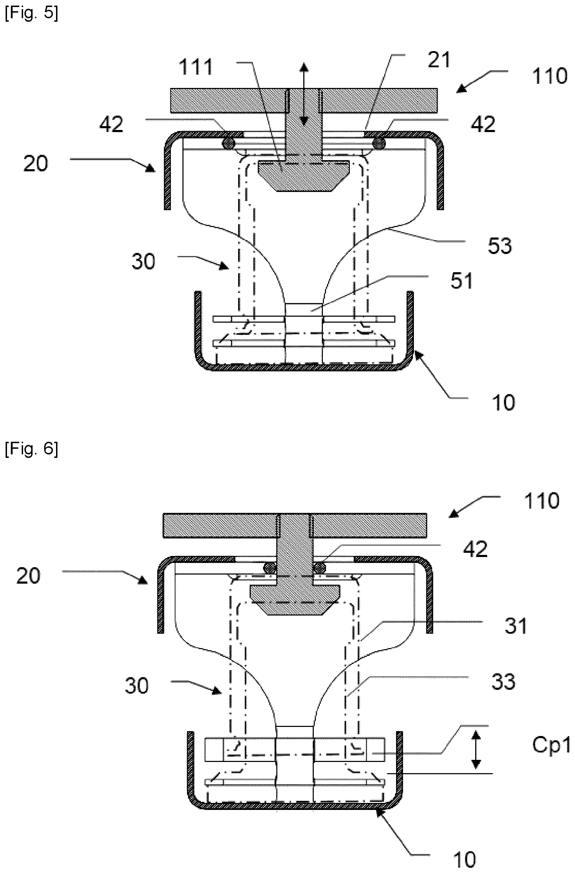

La figure 5 montre une coupe transversale du dispositif de levée de capot de la figure 4, dans laquelle on voit que les extrémités libres 42 de l'organe de verrouillage 40 sont suffisamment écartées l'une de l'autre pour laisser le plot épaulé 111 librement entrer et sortir du trou de passage 21.

Pour des raisons de clarté, l'actionneur pyrotechnique 30 est montré seulement en traits fantômes (traits mixtes fins) sur cette figure 5, ainsi que sur les figures 6 et 7.

Les figures 6 et 7 montrent le dispositif de levée de capot de la figure 4, respectivement en début de fonctionnement et en fin de fonctionnement.

Sur la figure 6, l'actionneur pyrotechnique vient d'être actionné ou mis à feu, et le piston 31 a parcouru une course de piston Cp1 par rapport au socle 33. En conséquence, le membre de liaison déformable 50 à commencé à se déplier, et surtout, la tête de poussée 20 s'est également soulevée de la valeur de la course de piston Cp1, ce qui a dégagé les extrémités libres 42 de l'embase 10. En conséquence, et comme le montre la figure 6, les extrémités libres 42 se sont rapprochées l'une de l'autre sous l'effet de la force élastique, si bien que la tête du plot épaulé 111 ne peut plus sortir du trou de passage 21. Ainsi, l'organe de verrouillage 40 est passé d'une position dégagée (figures 2, 3 et 4) à une position engagée (figures 6 et 7), dans laquelle le capot de véhicule 100 est accroché à la tête de poussée 20 via le plot épaulé 111 et l'organe de verrouillage 40.

Pour garantir que les extrémités libres 42 se rapprochent suffisamment l'une de l'autre pour arriver en position engagée, on peut prévoir que les contre formes 12 soient proches de l'arête supérieure de l'aile 11, c'est-à-dire à moins de 15 mm, de préférence à moins de 10 mm, et plus préférentiellement à moins de deux fois le diamètre du jonc formant l'organe de verrouillage 40.

La figure 7 représente la fin du fonctionnement, avec la tête de poussée 20 en position activée, et le membre de liaison déformable 50 complètement déplié. On note que le piston 31 s'est déplacé d'une course de piston Cp, et que la tête de poussée 20 s'est déplacée d'une course Ct, qui est supérieure. Dans le cas présent, on a Ct > 2 x Cp , ce qui signifie en d'autres termes que la tête de poussée 20, la portion d'ancrage 110 et donc le capot de véhicule 100 se sont déplacés pendant la course de piston Cp sous la force directe de l'actionneur pyrotechnique 30, et ensuite par inertie pour aller jusqu'en position activée. On peut noter en conséquence que le piston 31 ne touche plus du tout la tête de poussée 20 à ce stade.

Il peut être important de garantir que l'élément de verrouillage 40 arrive en position engagée pendant le piston 31 est encore en contact avec la tête de poussée 20 (c'est-à-dire avant le déplacement par inertie). A cet effet, pour garantir que les extrémités libres 42 se rapprochent suffisamment rapidement l'une de l'autre pour arriver en position engagée, on peut prévoir que les contre formes 12 soient proches de l'arête supérieure de l'aile 11, c'est-à-dire à moins de 25% de la course totale Cp du piston, de préférence à moins de 20% de la course totale Cp du piston. On peut aussi prévoir que les pattes de l'organe de verrouillage 40 aient une course la plus faible possible à parcourir entre la position de la figure 5 et la position de la figure 6. Dans le plan de coupe de la figure 5, on peut prévoir que les extrémités libres 42 soient à une distance prédéterminée l'une de l'autre inférieure à un diamètre de la tête du plot épaulé 111 majoré d'un jeu de passage. Le jeu de passage peut être inférieur à deux fois le diamètre du jonc formant l'organe de verrouillage 40.

Sur la figure 7, l'organe de verrouillage 40 est toujours en position engagée ce qui garantit que le capot de véhicule 100 est accroché à la tête de poussée 20 et ne peut pas continuer à s'ouvrir par exemple.

En résumé, le dispositif de levée de capot selon la présente invention permet de garantir une ouverture et fermeture libre du capot de véhicule 100 tant que la tête de poussée est en position de repos. Une fois ou dès que la tête de poussée 20 quitte la position de repos, l'organe de verrouillage se dégage de l'embase 10 pour passer en configuration engagée, ce qui garantit que le capot de véhicule est bien accroché à la tête de poussée 20 et ne plus s'en dégager.

On comprendra que diverses modifications et/ou améliorations évidentes pour l'homme du métier peuvent être apportées aux différents modes de réalisation de l'invention décrits dans la présente description sans sortir du cadre de l'invention. En particulier, il est fait référence à un actionneur pyrotechnique qui comprend un allumeur électro pyrotechnique, mais on peut envisager d'utiliser une charge relais ou une charge additionnelle.

Par ailleurs, il est fait mention d'un membre de liaison déformable 50, mais on peut envisager plusieurs membres déformables, une déformation élastique ou plastique et même une déformation réversible pour permettre un amortissement du capot de véhicule après un choc avec le piéton, qui présente un hystérésis pour par exemple permettre un déploiement rapide et aisé de la position de repos à la position activée (autrement dit sans requérir beaucoup d'énergie), et un amortissement avec une dissipation d'énergie importante lors d'un retour éventuel vers la position de repos.

Enfin, l'embase 10, le membre de liaison déformable 50 et la tête de poussée 20 sont réalisés dans une même tôle, mais on peut envisager des composants distincts assemblés les uns aux autres.

## Revendications

1. Dispositif de levée de capot, comprenant :

   - une embase (10), agencée pour être solidaire d'un châssis de véhicule,
   - une tête de poussée (20), agencée pour soulever un capot de véhicule (100) et mobile entre une position de repos et une position activée,
   - un actionneur pyrotechnique (30), agencé pour déplacer la tête de poussée (20) depuis la position de repos vers la position activée, après actionnement,
   - un organe de verrouillage (40), agencé pour s'engager avec le capot de véhicule (100) lors du déplacement de la tête de poussée (20) depuis la position de repos vers la position activée,
   - une portion d'ancrage (110) agencée pour faire partie du capot et comprenant un plot épaulé (111) agencé pour pouvoir s'engager avec l'organe de verrouillage (40),
   le dispositif de levée de capot comprenant un membre de liaison déformable (50), reliant l'embase (10) à la tête de poussée (20) et agencé pour être déformé lors du déplacement de la tête de poussée (20) depuis la position de repos vers la position activée, après actionnement de l'actionneur pyrotechnique (30),

l'organe de verrouillage (40) étant agencé pour être constamment dégagé du capot de véhicule (100) lorsque la tête de poussée (20) est en position de repos,

le plot épaulé (111) étant agencé en regard de l'organe de verrouillage (40) selon une direction de déplacement de la tête de poussée lorsque la tête de poussée (20) est en position de repos.

2. Dispositif de levée de capot selon la revendication 1, dans lequel l'organe de verrouillage (40) est agencé pour être mobile entre :

- une position dégagée, dans laquelle le capot de véhicule (100) est laissé libre par l'organe de verrouillage (40),
- une position engagée, dans laquelle le capot de véhicule (100) est engagé avec l'organe de verrouillage (40),

et dans lequel l'organe de verrouillage (40) passe de la position dégagée à la position engagée lorsque la tête de poussée (20) passe de la position de repos à la position activée.

3. Dispositif de levée de capot selon l'une des revendications 1 à 2, dans lequel l'organe de verrouillage (40) est embarqué sur la tête de poussée (20).

4. Dispositif de levée de capot selon la revendication 3, dans lequel l'organe de verrouillage (40) comprend une portion élastique, et dans lequel, lorsque la tête de poussée (20) est en position de repos, la portion élastique est engagée avec l'embase (10), de sorte à être mise en tension.

5. Dispositif de levée de capot selon la revendication 4, dans lequel, lorsque la tête de poussée (20) passe de la position de repos à la position activée, la portion élastique est agencée pour se dégager de l'embase (10), de sorte à retourner dans une position détendue, pour engager l'organe de verrouillage (40) avec le capot de véhicule (100).

6. Dispositif de levée de capot selon l'une des revendications 4 à 5, dans lequel l'embase (10) comprend au moins une contre-forme (12) agencée pour recevoir la portion élastique lorsque la tête de poussée (20) est en position de repos.

7. Dispositif de levée de capot selon la revendication 6, dans lequel l'embase (10) comprend :

- une portion d'assise, agencée pour être attachée sur le châssis du véhicule,
- une aile (11) avec une première extrémité liée à la portion d'assise et une deuxième extrémité comprenant la contre-forme (12).

8. Dispositif de levée de capot selon l'une des revendications 1 à 7, dans lequel l'organe de verrouillage (40) forme une agrafe élastique en Vé, avec une partie du Vé insérée dans une fente de la tête de poussée (20), et dans lequel, lorsque la tête de poussée (20) est en position de repos, les deux extrémités libres (42) du Vé sont écartées élastiquement l'une de l'autre par l'embase (10).

9. Dispositif de levée de capot selon l'une des revendications 1 à 8, dans lequel l'organe de verrouillage (40) est un jonc élastique.

10. Dispositif de levée de capot selon l'une des revendications 1 à 9, dans lequel l'actionneur pyrotechnique (30) comprend un piston (31) mobile entre une position initiale de piston et une position finale de piston, et dans lequel la course Cp du piston (31) entre la position finale de piston et la position initiale de piston est inférieure à la course Ct de la tête de poussée (20) entre la position activée et la position de repos,

et de préférence :

$$Ct > 1.5 \times Cp \ ;$$

et plus préférentiellement :

$$Ct > 1.9 \times Cp$$

11. Dispositif de levée de capot selon l'une des revendications 1 à 10, dans lequel le membre de liaison déformable (50), lorsque la tête de poussée (20) est en position de repos, présente au moins un pli (52) et deux portions repliées sur elles mêmes, dans lequel le membre de liaison déformable (50) comprend une échancrure (53) agencée au niveau du pli (52).

12. Dispositif de levée de capot selon la revendication 11, dans lequel le membre de liaison déformable (50), lorsque la tête de poussée (20) est en position de repos, présente une pluralité de plis (52) et dans lequel une section transversale STp du membre de liaison déformable (50) au niveau de chaque pli (52) est inférieure à une section transversale STi du membre de liaison déformable (50) entre deux plis (52),

et de préférence :

$$STi > 2 \times STp \ ;$$

et plus préférentiellement :

$$STi > 3 \times STp$$

13. Dispositif de levée de capot selon l'une des revendications 1 à 12 dans lequel l'embase (10), le membre de liaison déformable (50) et la tête de poussée (20) sont formés dans une même pièce de métal.

14. Véhicule automobile comprenant :

   - un capot de véhicule (100),
   - au moins un dispositif de levée de capot selon l'une des revendications 1 à 13.

15. Véhicule automobile selon la revendication 14, comprenant un dispositif de verrouillage du capot de véhicule (100) en position fermée, distinct du dispositif de levée de capot.

**Patentansprüche**

1. Vorrichtung zum Anheben einer Haube, umfassend:

   - eine Basis (10), die angeordnet ist, um fest mit einem Fahrzeugrahmen verbunden zu sein,
   - einen Schubkopf (20), der zum Anheben einer Fahrzeughaube (100) angeordnet und zwischen einer Ruheposition und einer aktivierten Position beweglich ist,
   - einen pyrotechnischen Aktuator (30), der angeordnet ist, um den Schubkopf (20) nach Betätigung aus der Ruheposition in die aktivierte Position zu versetzen,
   - ein Verriegelungselement (40), das angeordnet ist, um mit der Fahrzeughaube (100) bei der Versetzung des Schubkopfs (20) aus der Ruheposition in die aktivierte Position in Eingriff zu kommen,
   - einen Verankerungsabschnitt (110), der angeordnet ist, um einen Teil der Motorhaube zu bilden, und einen Schulterbolzen (111) umfasst, der angeordnet ist, um mit dem Verriegelungselement (40) in Eingriff gebracht werden zu können,
   wobei die Vorrichtung zum Anheben einer Haube ein verformbares Verbindungsglied (50) umfasst, das die Basis (10) mit dem Schubkopf (20) verbindet und angeordnet ist, um bei der Versetzung des Schubkopfs (20) aus der Ruheposition in die aktivierte Position nach Betätigung des pyrotechnischen Aktuators (30) verformt zu werden,
   wobei das Verriegelungselement (40) angeordnet ist, um konstant von der Fahrzeughaube (100) gelöst zu werden, wenn sich der Schubkopf (20) in Ruheposition befindet,
   wobei der Schulterbolzen (111) gegenüber dem Verriegelungselement (40) in einer Versetzungsrichtung des Schubkopfs angeordnet ist, wenn sich der Schubkopf (20) in Ruheposition befindet.

2. Vorrichtung zum Anheben einer Haube nach Anspruch 1, wobei das Verriegelungselement (40) angeordnet ist, um beweglich zu sein zwischen:

   - einer gelösten Position, wobei die Fahrzeughaube (100) durch das Verriegelungselement (40) freigelassen wird,
   - eine Eingriffsposition, wobei die Fahrzeughaube (100) mit dem Verriegelungselement (40) in Eingriff steht,

   und wobei sich das Verriegelungselement (40) von der gelösten Position in die Eingriffsposition bewegt, wenn der Schubkopf (20) von der Ruheposition in die aktivierte Position übergeht.

3. Vorrichtung zum Anheben einer Haube nach einem der Ansprüche 1 bis 2, wobei das Verriegelungselement (40) auf dem Schubkopf (20) eingebaut ist.

4. Vorrichtung zum Anheben einer Haube nach Anspruch 3, wobei das Verriegelungselement (40) einen elastischen Abschnitt umfasst und wobei, wenn sich der Schubkopf (20) in Ruheposition befindet, der elastische Abschnitt mit der Basis (10) in Eingriff steht, sodass er unter Spannung gesetzt wird.

5. Vorrichtung zum Anheben einer Haube nach Anspruch 4, wobei, wenn der Schubkopf (20) von der Ruheposition in die aktivierte Position übergeht, der elastische Abschnitt so angeordnet ist, dass er sich von der Basis (10) löst, sodass er in eine entspannte Position zurückkehrt, um das Verriegelungselement (40) mit der Fahrzeughaube (100) in Eingriff zu bringen.

6. Vorrichtung zum Anheben einer Haube nach einem der Ansprüche 4 bis 5, wobei die Basis (10) mindestens eine Gegenform (12) umfasst, die angeordnet ist, um den elastischen Abschnitt aufzunehmen, wenn sich der Schubkopf (20) in Ruheposition befindet.

7. Vorrichtung zum Anheben einer Haube nach Anspruch 6, wobei die Basis (10) umfasst:

   - einen Sitzabschnitt, der angeordnet ist, um am Rahmen des Fahrzeugs befestigt zu werden,
   - einen Flügel (11) mit einem ersten Ende, das mit dem Sitzabschnitt verbunden ist, und einem zweiten Ende, umfassend die Gegenform (12).

**8.** Vorrichtung zum Anheben einer Haube nach einem der Ansprüche 1 bis 7, wobei das Verriegelungselement (40) eine elastische V-förmige Klammer bildet, wobei ein Teil des V in einen Schlitz des Schubkopfs (20) eingesetzt ist, und wobei, wenn sich der Schubkopf (20) in Ruheposition befindet, die zwei freien Enden (42) des V durch die Basis (10) elastisch voneinander abgespreizt werden.

**9.** Vorrichtung zum Anheben einer Haube nach einem der Ansprüche 1 bis 8, wobei das Verriegelungselement (40) ein elastischer Ring ist.

**10.** Vorrichtung zum Anheben einer Haube nach einem der Ansprüche 1 bis 9, wobei der pyrotechnische Aktuator (30) einen Kolben (31) umfasst, der zwischen einer Kolbenanfangsposition und einer Kolbenendposition beweglich ist, und wobei der Hub Cp des Kolbens (31) zwischen der Kolbenendposition und der Kolbenanfangsposition kleiner als der Hub Ct des Schubkopfs (20) zwischen der aktivierten Position und der Ruheposition ist, und vorzugsweise:

$$Ct > 1{,}5 \times Cp;$$

und mehr bevorzugt:

$$Ct > 1{,}9 \times Cp$$

**11.** Vorrichtung zum Anheben einer Haube nach einem der Ansprüche 1 bis 10, wobei das verformbare Verbindungsglied (50), wenn sich der Schubkopf (20) in Ruheposition befindet, mindestens eine Falte (52) und zwei auf sich selbst zurückgefaltete Abschnitte aufweist, wobei das verformbare Verbindungsglied (50) eine Aussparung (53) umfasst, die im Bereich der Falte (52) angeordnet ist.

**12.** Vorrichtung zum Anheben einer Haube nach Anspruch 11, wobei das verformbare Verbindungsglied (50), wenn sich der Schubkopf (20) in Ruheposition befindet, eine Vielzahl von Falten (52) aufweist und wobei ein Querschnitt STp des verformbaren Verbindungsglieds (50) im Bereich jeder Falte (52) kleiner ist als ein

Querschnitt STi des verformbaren Verbindungsglieds (50) zwischen zwei Falten (52), und vorzugsweise:

$$STi > 2 \times STp;$$

und mehr bevorzugt:

$$STi > 3 \times STp$$

**13.** Vorrichtung zum Anheben einer Haube nach einem der Ansprüche 1 bis 12 wobei die Basis (10), das verformbare Verbindungsglied (50) und der Schubkopf (20) aus einem gleichen Metallstück gebildet sind.

**14.** Kraftfahrzeug, umfassend:

- eine Fahrzeughaube (100),
- mindestens eine Vorrichtung zum Anheben einer Haube nach einem der Ansprüche 1 bis 13.

**15.** Kraftfahrzeug nach Anspruch 14, umfassend eine Vorrichtung zum Verriegeln der Fahrzeughaube (100) in geschlossener Position, die von der Vorrichtung zum Anheben der Haube getrennt ist.

**Claims**

**1.** Hood-raising device, comprising:

- a base (10), which is arranged to be secured to a vehicle chassis,
- a push head (20), which is arranged to lift a vehicle hood (100) and is movable between a rest position and an activated position,
- a pyrotechnic actuator (30), which is arranged to move the push head (20) from the rest position to the activated position following actuation,
- a locking element (40), which is arranged to engage with the vehicle hood (100) when the push head (20) is moved from the rest position to the activated position,
- an anchoring portion (110), which is arranged to form part of the hood and comprises a shouldered pin (111), which is arranged to be able to engage with the locking element (40),

the hood-raising device comprising a deformable linking member (50), which links the base (10) to the push head (20) and is arranged to be deformed when the push head (20) is moved from the rest position to the activated position following actuation of the pyrotechnic actuator (30),

the locking element (40) being arranged to be constantly disengaged from the vehicle hood (100) when the push head (20) is in the rest position,

the shouldered pin (111) being arranged facing the locking element (40) in a direction of movement of the push head when the push head (20) is in the rest position.

**2.** Hood-raising device according to claim 1, wherein the locking element (40) is arranged to be movable between:

- a disengaged position, in which the vehicle hood (100) is left free by the locking element (40),
- an engaged position, in which the vehicle hood (100) is engaged with the locking element (40),

and wherein the locking element (40) passes from the disengaged position to the engaged position when the push head (20) passes from the rest position to the activated position.

3. Hood-raising device according to one of claims 1 to 2, wherein the locking element (40) is embedded on the push head (20).

4. Hood-raising device according to claim 3, wherein the locking element (40) comprises an elastic portion and wherein, when the push head (20) is in the rest position, the elastic portion is engaged with the base (10) in such a manner that it is placed under tension.

5. Hood-raising device according to claim 4, wherein, when the push head (20) passes from the rest position to the activated position, the elastic portion is arranged to disengage from the base (10) in such a manner that it returns to a relaxed position, to engage the locking element (40) with the vehicle hood (100).

6. Hood-raising device according to one of claims 4 to 5, wherein the base (10) comprises at least one counter-form (12) arranged to receive the elastic portion when the push head (20) is in the rest position.

7. Hood-raising device according to claim 6, wherein the base (10) comprises:

- a seat portion, which is arranged to be attached to the vehicle chassis,
- a wing (11) having a first end linked to the seat portion and a second end comprising the counter-form (12).

8. Hood-raising device according to one of claims 1 to 7, wherein the locking element (40) forms an elastic clip shaped as a V, with one part of the V inserted in a slit of the push head (20) and wherein, when the push head (20) is in the rest position, the two free ends (42) of the V are elastically separated from one another by the base (10).

9. Hood-raising device according to one of claims 1 to 8, wherein the locking element (40) is an elastic ring.

10. Hood-raising device according to one of claims 1 to 9, wherein the pyrotechnical actuator (30) comprises a piston (31) which is movable between an initial piston position and a final piston position, and wherein the stroke Cp of the piston (31) between the final piston position and the initial piston position is less than the stroke Ct of the push head (20) between the activated position and the rest position, and preferably:

$$Ct > 1.5 \times Cp;$$

and more preferably:

$$Ct > 1.9 \times Cp.$$

11. Hood-raising device according to one of claims 1 to 10, wherein the deformable linking member (50), when the push head (20) is in the rest position, has at least one fold (52) and two portions folded onto themselves, wherein the deformable linking member (50) comprises a notch (53) arranged at the fold (52).

12. Hood-raising device according to claim 11, wherein the deformable linking member (50), when the push head (20) is in the rest position, has a plurality of folds (52) and wherein a cross section STp of the deformable linking member (50) at every fold (52) is smaller than a cross section STi of the deformable linking member (50) between two folds (52), and preferably:

$$STi > 2 \times STp;$$

and more preferably:

$$STi > 3 \times STp.$$

13. Hood-raising device according to one of claims 1 to 12, wherein the base (10), the deformable linking member (50) and the push head (20) are formed from the same piece of metal.

14. Automotive vehicle comprising:

- a vehicle hood (100),
- at least one hood-raising device according to one of claims 1 to 13.

15. Automotive vehicle according to claim 14, comprising a device to lock the vehicle hood (100) in a closed position which is different from the hood-raising device.

[Fig. 1]

[Fig. 2]

[Fig. 3]

[Fig. 4]

[Fig. 5]

[Fig. 6]

[Fig. 7]

**EP 3 904 164 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1452408 B1
- WO 02072393 A1